# EUROPEAN PATENT APPLICATION

(11) **EP 3 761 106 A1**
(43) Date of publication of application: **06.01.2021**
(21) Application number: 19761176.7
(22) Date of filing: 01.03.2019
(51) Int. Cl.: G02F 1/061, C08G 64/04

(54) **POLYCARBONATE HAVING ELECTRO-OPTIC EFFECT, METHOD FOR PRODUCING SAME, AND LIGHT CONTROL ELEMENT WHICH USES SAID POLYCARBONATE**

(30) Priority: 02.03.2018 JP 2018038046
(71) Applicant: Teijin Limited, Osaka 530-0005 (JP); National Institute of Information and Communications Technology, Koganei-shi, Tokyo 184-8795 (JP)
(72) Inventor: TAKAHASHI, Naoshi, Osaka-shi, Osaka 530-0005 (JP); YAMANAKA, Katsuhiro, Osaka-shi, Osaka 530-0005 (JP); OTOMO, Akira, Koganei-shi, Tokyo 184-8795 (JP); YAMADA, Toshiki, Koganei-shi, Tokyo 184-8795 (JP)
(74) Representative: Gerauer, Marc Philippé
(86) International application number: PCT/JP2019/008238
(87) International publication number: WO 2019/168186

(57) **Abstract**

The purpose of the present invention is to provide: a novel polymer which has an electro-optical effect; a method for producing such a polymer; and a light control element which uses such a polymer. The present invention relates to a non-crosslinkable polycarbonate which contains a moiety that has electro-optical characteristics. The present invention also relates to a method for producing a polycarbonate, which comprises a step for reacting a bisphenol compound, a diol compound that has electro-optical characteristics, and a phosgene in the presence of an acid binding agent and solvent. The present invention also relates to a light control element which comprises such polycarbonate.

## Description

The present invention relates to a polycarbonate having an electro-optical effect and a method for producing the same, and an optical control element using that polycarbonate.

### BACKGROUND

Inorganic materials such as lithium niobate have previously been used for electro-optical materials able to be applied to optical modulators, optical switches, optical memory, optoelectronic circuits, wavelength converters, electric field sensors, THz wave generators, and receivers holograms and other optical control elements. However, these inorganic materials have limitations in terms of high-speed performance and are unsatisfactory for realizing next-generation ultra-high-speed communication.

In contrast, organic electro-optical polymers (also referred to as "EO polymers") demonstrate greater electro-optical effects (also referred to as "EO effects") in comparison with inorganic materials and are expected to be used as electro-optical materials responsible for next-generation optical communication, since they are capable of high-speed operation. However, the production of these optical control elements still entails many problems to be solved, and the practical application thereof has yet to be accomplished. One problem is the long-term high-temperature stability of EO effects.

In relation thereto, PTL1 discloses a crosslinking polymer composition of a polymer containing a site having electro-optical properties (EO site) in a side chain thereof. In the invention described in PTL1, by enabling the polymer to crosslink, movement of the EO site is limited while also making it possible to obtain a high glass transition temperature. As a result, the crosslinking polymer composition described in PTL1 is able to provide an EO effect and long-term high-temperature stability associated with that effect.

PTL2 discloses an acrylic EO polymer that uses a specific acrylic monomer. Since this acrylic EO polymer has a comparatively high glass transition temperature, orientation of the EO site obtained after polling processing can be maintained for a long period of time, allowing the obtaining long-term high-temperature stability of the EO effect.

Electro-optical molecules are disclosed in, for example, PTL3-5 and NPL1-4.

### [CITATION LIST]

### [PATENT LITERATURE]

[PTL 1] Japanese Unexamined Patent Publication No. 2014-44272
[PTL 2] Japanese Unexamined Patent Publication No. 2015-178544
[PTL 3] U.S. Patent No. 6067186
[PTL 4] Japanese Translation of PCT International Application Publication No. 2004-501159
[PTL 5] International Publication No. WO2011/024774A1

### [NON-PATENT LITERATURE]

[NPL 1] Toshiki Yamada, et al., "Effect of two methoxy groups bound to an amino-benzene donor unit for thienyl-di-vinylene bridged EO chromophores", Optical Materials, June 25, 2013, Volume 35, Issue 12, page 2194-2200
[NPL 2] Toshiki Yamada, et al., "Important role of the ethylene dioxy group bound to the thienyl-di-vinylene π-conjugation unit of tricyanofuran-based donor-acceptor electro-optic chomophores", Optical Materials Express, September 1, 2016, Volume 6, No. 9, page 3021-3035
[NPL 3] Toshiki Yamada, et al., "Effect of methoxy or benzyloxy groups bound to an amino-benzene donor unit for various nonlinear optical chromophores as studied by hyper-Rayleigh scattering", Materials Chemistry and Physics, May 15, 2013, Volume 139, Issues 2-3, page 699-705
[NPL 4] Mingqian He, et al., "a-Hydroxy Ketone Precursors Lead to a Nobel class of Electro-optic Acceptors", Chemistry of Materials, April 17, 2002, Volume 14, pages 2393-2400

### SUMMARY

### [TECHNICAL PROBLEM]

An object of the present invention is to provide a novel polymer having an electro-optical effect. A further object of the present invention is to provide a method for producing this polymer and an optical control element that uses the polymer.

### [SOLUTION TO PROBLEM]

The inventors of the present invention found that the aforementioned problems can be solved by the present invention having the aspects indicated below.

### Aspect 1

A non-crosslinking polycarbonate containing a site having electro-optical properties.

### Aspect 2

The polycarbonate described in Aspect 1 containing a structural unit represented by the following formula (1): 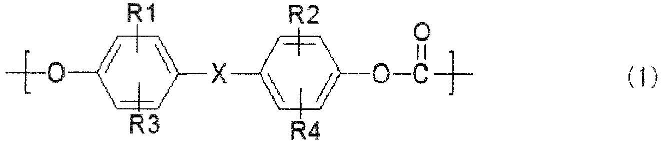 wherein R1 to R4 are respectively and independently selected from the group consisting of linear or cyclic, substituted or unsubstituted hydrocarbon groups having 1 to 20 carbon atoms, which may have a hydrogen atom, halogen atom and hetero atom and/or may be branched; and X is selected from the group consisting of linear or cyclic, substituted or unsubstituted divalent hydrocarbon groups having 1 to 30 carbon atoms, which may have a single bond, sulfur atom, oxygen atom and hetero atom and/or may be branched.

### Aspect 3

The polycarbonate described in Aspect 2, wherein X is represented by the following formula (2): 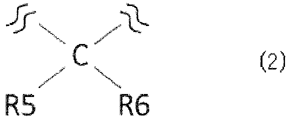
wherein at least one of R5 and R6 is selected from linear or cyclic, substituted or unsubstituted hydrocarbon groups having 2 to 20 carbon atoms, which may have a halogen atom or heteroatom and/or may be branched, while the other is selected from substituted or unsubstituted hydrocarbon groups having 1 to 20 carbon atoms, which may have a hydrogen atom, halogen atom and heteroatom and/or may be branched;
   or
R5 and R6 may bond to form a substituted or unsubstituted cyclic hydrocarbon group having 4 to 20 carbon atoms, which may have a heteroatom and/or may be branched.

### Aspect 4

The polycarbonate described in Aspect 3, wherein R5 and R6 are bound to form a cyclic group having 1 to 5 substiuents, the substituents are respectively selected from alkyl groups having 1 to 4 carbon atoms, and the cyclic group is selected from a cyclic alkyl group or aryl group.

### Aspect 5

The polycarbonate described in any of Aspects 1 to 4, wherein the weight average molecular weight is 20,000 or more.

### Aspect 6

The polycarbonate described in any of Aspects 1 to 5, wherein the glass transition temperature is 120°C or higher.

### Aspect 7

The polycarbonate described in any of Aspects 1 to 6, wherein the site having electro-optical properties has an electron donating donor structural unit, an electron accepting acceptor structual unit, and a conjugated bridge structural unit that connects the donor structural unit and the acceptor structural unit.

### Aspect 8

A method for producing a polycarbonate, including: reacting a bisphenol compound, a diol compound having electro-optical properties and phosgene in the presence of an acid binder and solvent.

### Aspect 9

The production method described in Aspect 8, wherein the acid binder is pyridine.

### Aspect 10

The production method described in Aspect 8 or 9, wherein a terminal stop agent is further reacted in the reaction.

### Aspect 11

The production method described in any of Aspects 8 to 10, wherein the reaction is carried out at a temperature of 35°C or lower.

### Aspect 12

An optical control element containing the polycarbonate described in any of Aspects 1 to 7.

### Aspect 13

An optical waveguide formed by the polycarbonate described in any of Aspects 1 to 7.

### BRIEF DESCRIPTION OF DRAWINGS

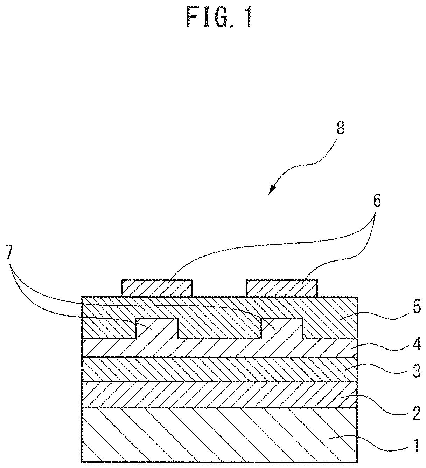

FIG. 1 indicates an example of the configuration of an optical waveguide, which is one aspect of an optical control element.

### DESCRIPTION OF EMBODIMENTS

### Polycarbonate

The polycarbonate of the present invention contains an EO site and is non-crosslinking.

In the present description, a "non-crosslinking polymer" is used in a different sense than the crosslinking polymer described in PTL1, and for example, crosslinking functional groups in the polymer account for 10 mol%, 5 mol% or less, 3 mol% or less, 1 mol% or less, 0.5 mol% or less, 0.3 mol% or less or 0.1 mol% or less.

The inventors of the present invention found that a high EO effect and long-term, high-temperature stability associated with that effect can be realized by incorporating a molecule having electro-optical properties in a polycarbonate. In addition, in the case of a crosslinking polymer as described in PTL1 or an acrylic EO polymer as described in PTL2, when a film thereof is formed on a substrate and that film is peeled from the substrate, the film ends up separating comparatively easily thereby creating problems in terms of strength when used in a device. However, this problem was found to be able to be solved by the polycarbonate of the present invention. Moreover, the polycarbonate of the present invention has high transparency with respect to near infrared light of the O band (1260 nm to 1360 nm) and C band (1530 nm to 1565 nm) that are used for optical communication, and was determined to be extremely useful in optical control elements.

The polycarbonate of the present invention is able to have a high glass transition temperature, and for example, the glass transition temperature thereof may be 100°C or higher, 110°C or higher, 120°C or higher, 130°C or higher, 140°C or higher, 150°C or higher, 160°C or higher, 170°C or higher, 180°C of higher or 190°C or higher, and 250°C or lower, 230°C or lower, 210°C or lower or 190°C or lower. For example, the glass transition temperature may be 100°C to 250°C, 120°C to 230°C, or 170°C to 210°C. As a result of having a glass transition temperature within these ranges, in addition to obtaining an EO effect and long-term, high-temperature stability, thermal decomposition of the EO site can be prevented during polling processing.

### Polymer Structure

The weight average molecular weight (Mw) of the polycarbonate of the present invention in the case of having measured by GPC using a polystyrene standard and using chloroform as solvent may be 10,000 or more, 15,000 or more, 18,000 or more, 20,000 or more, 25,000 or more, 30,000 or more, 35,000 or more, 40,000 or more, 45,000 or more, or 50,000 or more, and 300,000 or less, 200,000 or less, 150,000 or less or 100,000 or less. For example, the weight average molecular weight (Mw) may be 40,000 to 200,000. In addition, the molecular weight distribution (Mw/Mn) may be 1.5 or more, 2.0 or more, 2.5 or more, 3.0 or more, 3.5 or more, 4.0 or more, 4.5 or more or 5.0 or more, and 10.0 or less, 8.0 or less, 7.0 or less or 6.0 or less. For example, the molecular weight distribution (Mw/Mn) may be 1.5 to 10.0 or 3.0 to 8.0. When within these ranges, sufficient strength and processing handling are imparted.

### (Main Constituent)

There are no particular limitations on the polycarbonate of the present invention, provided that the main constituent having a carbonate linked thereto is contained in the main chain and the advantageous effects of the present invention as described above are obtained.

An example such a constituent is a constituent derived from a bisphenol compound, and example thereof is the constituent represented by the following formula (1): 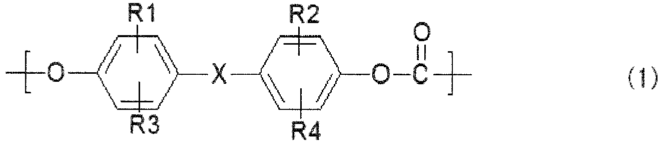 wherein R1 to R4 are respectively and independently selected from the group consisting of linear or cyclic, substituted or unsubstituted hydrocarbon groups having 1 to 20 carbon atoms, which may have a hydrogen atom, halogen atom and hetero atom and/or may be branched; and X is selected from the group consisting of linear or cyclic, substituted or unsubstituted divalent hydrocarbon groups having 1 to 30 carbon atoms, which may have a single bond, sulfur atom, oxygen atom and hetero atom and/or may be branched.

Preferably in the aforementioned formula (1), R1 to R4 respectively and independently represent a hydrogen atom, halogen atom, an alkyl group having 1 to 10 carbon atoms, an alkoxy group having 1 to 10 carbon atoms, a cycloalkyl group having 5 to 20 carbon atoms, a cycloalkoxy group having 6 to 20 carbon atoms, an aryl group having 6 to 10 carbon atoms, an aralkyl group having 7 to 20 carbon atoms, an aryloxy group having 6 to 10 carbon atoms, or an aralkyloxy group having 7 to 20 carbon atoms. X represents a single bond, substituted or unsubstituted alkylene group having 1 to 10 carbon atoms, substituted or unsubstituted alkylidene group having 1 to 10 carbon atoms, aryl group having 6 to 10 carbon atoms, substituted or unsubstituted cyclic alkyl group having 6 to 20 carbon atoms, a sulfur atom or an oxygen atom.

In the constituent represented by the aforementioned formula (1), R1 to R4 in formula (1) preferably respectively and independently represent a hydrogen atom, an alkyl group having 1 to 6 carbon atoms, a cycloalkyl group having 6 to 20 carbon atoms, or an aryl group having 6 to 10 carbon atoms.

In the aforementioned formula (1), X preferably represents a substituted or unsubstituted divalent cyclic hydrocarbon group having 5 to 30 carbons, which may have a heteroatom and/or may be branched, or a substituted or unsubstituted divalent linear hydrocarbon group having 1 to 30 carbon atoms, which may have a heteroatom containing a cyclic group in the branched portion.

In the aforementioned formula (1), X is more preferably represented by the following formula (2): 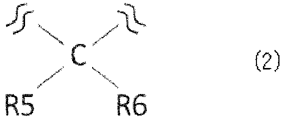
wherein at least one of R5 and R6 is selected from linear or cyclic, substituted or unsubstituted hydrocarbon groups having 2 to 20 carbon atoms, which may have a halogen atom or heteroatom and/or may be branched, while the other is selected from substituted or unsubstituted hydrocarbon groups having 1 to 20 carbon atoms, which may have a hydrogen atom, halogen atom and heteroatom and/or may be branched;
   or
R5 and R6 may bond to form a substituted or unsubstituted cyclic hydrocarbon group having 4 to 20 carbon atoms, which may have a heteroatom and/or may be branched.

At least one of R5 and R6 is more preferably contains a substituted or unsubstituted cyclic hydrocarbon group having 4 to 20 carbon atoms, which may have a heteroatom and/or may be branched, or R5 and R6 bond to form a cyclic hydrocarbon group.

R5 and R6 particularly preferably mutually bond to form a cyclic group having 1 to 5 substituents and the substituents are respectively selected from alkyl groups having 1 to 4 carbon atoms, and the cyclic group is selected from an cyclic alkyl group or aryl group,

Selection of such a bulky X tends to be able to increase the glass transition temperature of the polycarbonate. In addition, there is also a tendency to be able to increase the γ dispersion temperature, namely the temperature at which rotation about the axial direction of the main chain begins. The inventors of the present invention found that, in addition to the glass transition temperature, γ dispersion temperature has an effect on long-tenn, high-temperature stability in the case of using a polycarbonate-based EO polymer for an optical control element, and that selection of X as described above is preferable. On the other hand, the inventors of the present invention found that, in the case the bulkiness of X is excessively high, transparency of the polymer to near infrared light of the wavelength bands of the O band (1260 nm to 1360 nm) and C band (1530 nm to 1360 nm), which are used in optical communication, decreases, and selection of X within the aforementioned ranges was found to be preferable.

Furthermore, in the present description, unless specifically stipulated otherwise, "substituted" refers to being substituted with a linear or cyclic hydrocarbon group having 1 to 15 carbon atoms, which may have a heteroatom and/or may be branched. In addition, in this case, a plurality of that substituent may be present. In addition, examples of a "heteroatom" particularly include an oxygen atom and a sulfur atom.

A bisphenol compound can be used to introduce the constituent as described above, and the bisphenol compound represented by the following formula (3) in particular can be used: 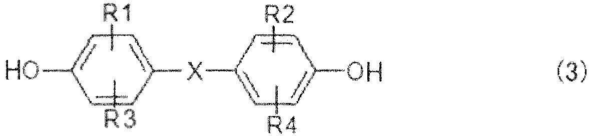 wherein R1 to R4 and X are as previously defined and preferable examples of R1 to R4 and X are also as previously defined.

More specifically, the following bisphenol compounds can be used: 1,1 -bis-(4-hydroxyphenyl)-3,3,5-trimethylcyclohexaane (to be referred to as bisphenol TMC), 2,2-bis(4-hydroxyphenyl)propane ((to be referred to as bisphenol A), 2,2-bis(4-hydroxy-3-methylphenyl)propane, 2,2-bis(4-hydroxy3-isopropylphenyl)propane, 2,2-bis(3-t-butyl-4-hydroxyphenyl)propane, 2,2-bis(3-phenyl-4-hydroxyphenyl)propane, 2,2-bis(3,5-dimethyl-4-hydroxyphenyl)propane, 2,2-bis(3,5-diisopropyl-4-hydroxyphenyl)propane, 2,2-bis(3,5di-t-butyl-4-hydroxyphenyl)propane, 2,2-bis(3,5-di-phenyl-4-hydroxyphenyl)propane, 1,1-bis(4-hydroxy-3-methylphenyl)cyclohexane, 1,1-bis(4-hydroxy-3-methylisopropylphenyl)cyclohexane, 1,1-bis(3-t-butyl-4-hydroxyphenyl)cyclohexane, 1,1-bis(3-phenyl-4-hydroxyphenyl)cyclohexane, 1,1-bis(3,5-dimethyl-4-hydroxyphenyl)cyclohexane, 1,1-bis(3,5-diisopropyl-4-hydroxy-phenyl)cyclohexane, 1,1-bis(3,5-di-t-buyyl-4-hydroxyphenyl)cyclohexane, 1,1-bis(3,5-diphenyl-4-hydroxyphenyl)cyclohexane, 1,1-bis(4-hydroxy-2,3,5,6-tetramethylphenyl)cyclohexane, 1,1-bis(4-hydroxy-3-methylphenyl)-3,3,5-trimethylcyclohexane, 1,1-bis(3-t-butyl-4-hydroxyphenyl)-3-3-5-trimethylcyclohexane, 1,1-bis(3-phenyl-4-hydroxyphenyl)-3,3,5-trimethylcyclohexane, 1,1-bis(3,5-dimethyl-4-hydroxyphenyl)-3,3,5-trimethylcyclohexane, 1,1-bis(3,5-diisopropyl-4-hydroxyphenyl)-3,3,5-trimethylcyclohexane, 1,1-bis(3,5-d-t-butyl-4-hydroxyphenyl)-3,3,5-trimethylcyclobexane, 1,1-bis(3,5-diphenyl-4-hydroxyphenyl)-3,3,5-trimethylcyclohexane, 1,1-bis(4-hydroxy-2,3,5,6-tetramethlphenyl-3,3,5-trimethylcyclohexanone, 4,4'-dihydroxy-3,3'-dimethyl-1,1-biphenyl, 4,4'-dihydroxy-3,3'-dioctyl-1,1-biphenyl, 1,3-bis(2-(4-hydroxy-3-methylphenyl-2-propyl)benzene, 1,4-bis(2-(4-hydroxy-3-methylphenyl)-2-propyl)benzene, 9,9-bis(4-hydroxy-3-methylphenyl)fluorene, 4,4'-dihydroxy-3,3'-dimethyl diphenyl ether, 3,3'-dimethyl-4,4'-dihydroxydiphenyl sulfide, bis(4-hydroxy-2,6-dimethyl-3-methoxyphenyl)methane, 2,2-bis(4-hydroxy-3-ethylphenyl)propane, 1,1-bis(3-methyl-4-hydroxyphenyl)decane, and 1,1-bis(2,3-dimethyl-4-hydroxyphenyl)decane.

Among these, bisphenols such as bisphenol TMC represented by the following formula (4) are particularly preferable:

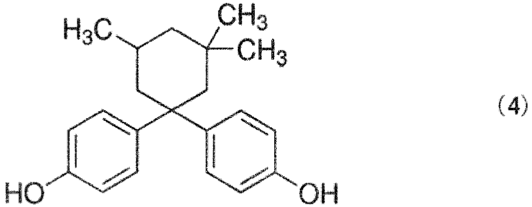

In bisphenol TMC, the portion corresponding to the aforementioned X that links two phenols is a cyclic group and since that cyclic group has a plurality of substituents, movement of the molecule is greatly limited. As a result, it is able to impart a high glass transition temperature and high γ dispersion temperature to the polycarbonate, which is particularly useful in applications in optical control elements. Bisphenol compounds in which the portion corresponding to the aforementioned X is bulky are useful in the same manner as bisphenol TMC.

The polycarbonate of the present invention may contain 50 mol% or more, 55 mol% or more, 60 mol% or more, 65 mol% or more, 70 mol% or more, 75 mol% or more, 80 mol% or more, 85 mol% or more or 90 mol% or more, and 99 mol% or less, 95 mol% or less, 90 mol% or less, 85 mol% or less, 80 mol% or less, 75 mol% or less, or 70 mol% or less of the constituent derived from a bisphenol compound. For example, the polycarbonate of the present invention may contain a constituent derived from a bisphenol compound at 50 mol% to 99 mol% or 70 mol% to 90 mol%. When within these ranges, strength and EO effect of the resulting polycarbonate tend to be adequate. Although the mole ratio is the ratio theoretically derived from the material used, it can be calculated by dissolving 40 mg of polycarbonate in 0.6 ml of deuterated chloroform solvent, measuring the 1H-NMR spectrum with a 400 MHz nuclear magnetic resonance system manufactured by JEOL, and calculating the molar ratio from the peak area ratio of the spectrum characteristic to each constituent.

### (Site having Electro-Optical Properties)

The EO site contained in the polycarbonate of the present invention may be bound as a pendant group of a functional group of the polymer side chain following polymerization, or may be bound to a polymer as a portion of a copolymer by using a precursor compound of that site as monomer.

There are no particular limitations on the EO site, provided it is oriented along the direction of an electric field by applying an electric field while heating the polymer bound thereto to equal to or higher than the glass transition temperature, and subsequently maintains that orientation as a result of cooling to a temperature equal to or lower than the glass transition temperature (so-called polling processing).

The EO site contained in the polymer of the present invention may have a thermal decomposition temperature of 120°C or higher, 140°C or higher, 160°C or higher, 180°C or higher, 200°C or higher or 220°C or higher, and 300°C or lower, 250°C or lower, 230°C or lower or 200°C or lower so as not to decompose during heating during polling processing. This thermal decomposition temperature may be 120°C to 300°C or 140°C to 250°C.

The mole ratio of the EO site contained in the polymer of the present invention may 1 mole% or more, 3 mole% or more, 5 mole% or more, 8 mole% or more, 10 mole% or more, 15 mole% or more or 20 mole% or more, and 50 mole% or less, 40 mole% or less, 30 mole% or less, 25 mole% or less, 20 mole% or less, 15 mole% or less or 10 mole% or less. The mole ratio of the EO site may be 1 mole% to 50 mole% or 10 mole% to 30 mole%. Alternatively, the weight ratio of the EO site may be 1 wt% or more, 3 wt% or more, 5 wt% or more, 8 wt% or more, 10 wt% or more, 15 wt% or more, 20 wt% or more, 25 wt% or more, 30 wt% or more or 35 wt% or more, and 80 wt% or less, 65 wt% or less, 50 wt% or less, 45 wt% or less, 40 wt% or less, 35 wt% or less or 30 wt% or less. The weight ratio of the EO site may be 1 wt% to 80 wt% or 20 wt% to 50 wt%. When within these ranges, strength and EO effect of the resulting polycarbonate tend to be adequate. Although the mole ratio and weight ratio may be values theoretically derived from the material used, they can be calculated by dissolving 40 mg of polycarbonate in 0.6 ml of deuterated chloroform solvent, measuring the 1 H-NMR spectrum with a 400 MHz nuclear magnetic resonance system manufactured by JEOL, and calculating from the peak area ratio of the spectrum characteristic to each constituent.

The EO site may have an electron donating donor structural unit D, an electron accepting acceptor structural unit A, and a conjugated bridge structural unit P that connects the donor structural unit D and the acceptor structural unit A. In this case, although EO site can bind to the polymer through either the donor structural unit D or acceptor structural unit A, it preferably bonds to the polymer through the donor structural unit D.

There are no particular limitations on the donor structure D, provided it bonds with the conjugated bridge structural unit P with a conjugated bond and has an electron donating group. The donor structural unit D may be, for example, a substituted or unsubstituted conjugated cyclic group containing a portion bound to the conjugated bridge structural unit P with a conjugated bond, a portion bound to the polymer, and an electron donating group. In this case, the portion bound to the conjugated bridge structural unit P with a conjugated bond and the portion bound to the polymer may each be a portion of the electron donating group, or may be portions directly bound to the conjugated cyclic group.

Examples of the conjugated cyclic group of the donor structural unit D include monocyclic or polycyclic cyclic hydrocarbon groups and heterocyclic groups in which a conjugated electron is present within the ring, and specific examples include aromatic rings and heteroaromatic groups.

The electron-donating group of the donor structural unit D may be bound to a conjugated cyclic group or may be contained in a substituent of a conjugated cyclic group. An example of an electron donating group is an amino group, and specific examples include tertiary amino groups bound to conjugated cyclic groups that constitute a portion of the polymer main chain.

The donor structural unit D preferably contains aminobenzene and particularly preferably has an alkyloxy group.

Although there are no particular limitations on the bridge structural unit P, provided it connects the donor structural unit D and the acceptor structural unit A with a conjugated bond, it may consist only of a carbon-carbon conjugated bond. In addition, the bridge structural unit P may, for example, be a portion of a substituted or unsubstituted conjugated cyclic group containing a portion bound to the donor structural unit D with a carbon-carbon conjugated bond and a portion bound to the acceptor structural unit A with a carbon-carbon conjugated bond.

The bridge structural unit P preferably has a thienyl group and particularly preferably has a thienyl-divinylene structure.

There are no particular limitations on the acceptor structural unit A, provided it is bound to the conjugated bridge structural unit P with a conjugated bond and has an electron accepting group. The acceptor structural unit A, for example, may be a substituted or unsubstituted conjugated cyclic group or conjugated linear hydrocarbon group containing a portion bound to the bridge structural unit P with a conjugated bond and an electron accepting group. In this case, the portion bound to the conjugated bridge structural unit P with a conjugated bond may be a portion directly bound with a conjugated cyclic group or conjugated linear hydrocarbon group.

Examples of the conjugated cyclic group of the acceptor structural unit A include monocyclic or polycyclic cyclic hydrocarbon groups and heterocyclic groups in which a conjugated electron is present within the ring thereof.

The electron accepting group of the acceptor structural unit A may be bound to a conjugated cyclic group or conjugated linear hydrocarbon group and may be contained in a substituent of a conjugated cyclic group. Examples of electron accepting groups include a nitrile (-CN) group, and fluorocarbon group (such as a trifluoromethyl group). A plurality of electron accepting groups is preferably present in the acceptor structural unit A.

The acceptor structural unit A preferably contains a tricyanofuran derivative and particularly preferably contains a tricyanofuran derivative containing a trifluoromethyl group.

This type of EO site can be obtained by bonding a molecular having second-order nonlinear optical properties as described in, for example, PTL3-5 and NPL1-4 to a polymer.

A diol compound having electro-optical properties can be used as monomer to bond to a polymer during polymerization of the EO site. For example, a diol-based compound may be used for the starting substance when synthesizing the diol compound having electro-optical properties. For example, although 4-butylamino-1-butanol is used to ultimately obtain a monohydroxy compound having electro-optical properties in Example 66 of PTL5, a diol compound having electro-optical properties can be obtained using a diol for the starting substance by suitably changing the reaction conditions and reaction process.

More specifically, an example of a diol compound having electro-optical properties is the compound indicated below.

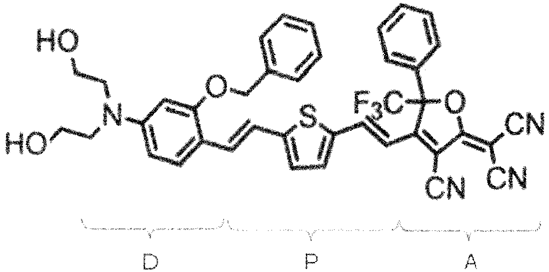

Symbols D, P and A shown below the aforementioned formula respectively indicate the donor structural unit D, conjugated bridge structural unit P and acceptor structural unit A.

In order to bond the EO site to a polymer during polymerization, a compound having three or more functional groups as described below is used as a monomer, and a monohydroxy compound having second-order nonlinear optical properties as described in PTL5 is reacted with the compound having three or more functional groups, thereby enabling the monohydroxy compound reaction product to be incorporated in the polycarbonate.

### (Other Constituent Units)

An example of a constituent unit other than the bisphenol compound and electro-optical molecule is a constituent derived from an aliphatic diol. Examples of this aliphatic diol include isosorbit:1,4:3,6-cyanohydro-D-sorbitol, tricyclodecane dimethanol (TCDDM), 4,8-bis(hydroxymethyl)tricyclodecane, tetramethylcyclobutane diol (TMCBD), 2,2,4,4-tetramethylcyclobutane-1,3-diol, mixed isomer, cis/trans-1,4-bis(cyclohexane dimethanol (CHDM), cis/trans-1,4-bis(hydroxymethyl)cyclohexane, cyclohex-1,4-ylene dimethanol, trans-1,4-cyclohexane dimethanol (tCHDM), trans-1,4-bis(hydroxymethyl)cyclohexane, cis-1,4-cyclohexane dimethanol (cCHDM), cis-1,4-bis(hydroxymethyl)cyclohexane, cis-1,2-cyclohexane dimethanol, 1,1'-bis(cyclohexyl)-4,4'-diol, spiroglycol, cyclohexyl-4,4'-diol, 4,4'-dihydroxybicyclohexyl and poly(ethylene glycol).

Another example of other constituent units is a constituent unit derived from a fatty acid. Thus, the polycarbonate of the present invention may be a polyester carbonate. Examples of such fatty acids include 1,10-dodecanedioic acid (DDDA), adipic acid, hexanedioic acid, isophthalic acid, 1,3-benzene dicarboxylic acid, terephthalic acid, 1,4-benzene dicarboxylic acid, 2,6-naphthalene dicarboxylic acid, 3-hydroxybenzoic acid (mHBA) and 4-hydroxybenzoic acid (pHBA).

Moreover, the polycarbonate of the present invention may contain a constituent unit derived from polyorganosiloxane, as necessary.

The polycarbonate of the present invention may contain a constituent unit derived from a compound having three or more functional groups, provided it is non-crosslinking and may be a branched polycarbonate. Examples of compounds having three or more functional groups used in branched polycarbonates include polyfunctional aromatic compounds, and specific examples preferably include trisphenols such as 4,6-dimethyl-2,4,6-tris(4-hydroxyphenyl)heptane-2,2,4,6-trimethyl-tris(4-hydroxyphenyl) heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)4-methyl phenol, and 4-{4-[1,1-bis(4-hydroxyphenyl)ethyl]benzene}-α,α-dimethylbenzyl phenol. Among these, 1,1,1-tris(4-hydroxyphenyl)ethane is preferable.

Furthermore, the branched constituent unit is not only derived from a polyfunctional compound, but may be formed from a side reaction that takes place during a polymerization reaction by a melt transesterification reaction. The proportion of this branched constituent unit can be calculated by 1H-NMR assay.

### (Terminal Groups)

The terminal groups of the polycarbonate of the present invention are preferably sealed. More specifically, the terminal groups of the polycarbonate of the present invention are preferably not chlorine groups or hydroxyl groups. Sealing of the terminals of the polycarbonate of the present invention makes it possible to improve mechanical properties. For example, 50% or more, 60% or more, 70% or more, 80% or more, 90% or more, 95% or more or 98% or more of the terminal groups of the polycarbonate of the present invention are sealed, or in other words, the terminal groups are preferably not chlorine groups or hydroxyl groups.

For example, a terminal stopping agent can be used to impart such a terminal group when polymerizing the polycarbonate. Examples of this terminal stopping agent include monofunctional phenol compounds, and specific examples include phenol, m-methylphenol, p-methylphenol, m-propylphenol, p-propylphenol, 1-phenylphenol, 2-phenylphenol, p-tert-butylphenol, p-cumylphenol, isooctylphenol and p-long chain alkyl phenols. These terminal stopping agents are particularly useful in the case of producing the polycarbonate of the present invention by a phosgene method in particular.

### Polycarbonate Production Method

There are no particular limitations on the polycarbonate of the present invention, provided that a polymer can be produced which allows the obtaining the advantageous effects of the present invention.

However, from the viewpoint of obtaining a high molecular weight polycarbonate, the polycarbonate of the present invention can be produced by a method consisting of reacting the aforementioned bisphenol compound, the aforementioned diol compound having electro-optical properties and phosgene in the presence of an acid binder and solvent.

Furthermore, "reacting the aforementioned bisphenol compound, the aforementioned diol compound having electro-optical properties and phosgene in the presence of an acid binder and solvent" includes "reacting the reaction product of the bisphenol compound and phosgene with a diol compound having electro-optical properties in the presence of an acid binder and solvent" and "reacting the reaction product of the bisphenol compound, the diol compound having electro-optical properties and phosgene in the presence of an amine compound as an acid binder and solvent."

Examples of acid binders include alkaline metal hydroxides such as sodium hydroxide or potassium hydroxide and amine compounds such as pyridine, and use of pyridine is particularly preferable. The amount of acid binder, and particularly the amount of pyridine, may be 5 parts by weight or more, 10 parts by weight or more or 15 parts by weight or more, and 30 parts by weight or less or 20 parts by weight or less based on 100 parts by weight of solvent.

Examples solvents include halogenated hydrocarbons such as methylene chloride, dichloroethane or chlorobenzene, and use of methylene chloride is particularly preferable.

The amount of monomer used may be 5 parts by weight or more, 10 parts by weight or more, or 15 parts by weight or more, and 30 parts by weight or less or 20 parts by weight or less based on 100 parts by weight of solvent. Alternatively, the monomer may be used at 5 parts by weight to 30 parts by weight or 10 parts by weight to 20 parts by weight based on 100 parts by weight of solvent.

The amount of phosgene may be 0.5 moles or more, 0.8 moles or more, 1.0 mole or more, 1.5 moles or more or 2.0 moles or more, and 3.0 moles or less, 2.0 moles or less, 1.8 moles or less or 1.5 moles or less based on 1 mole the bisphenol compound. When within these ranges, a high molecular weight polymer tends to be obtained. For example, the amount of phosgene may be 0.5 moles to 3.0 moles or 0.8 moles to 2.0 moles based on 1 mole of the bisphenol compound.

In addition, a terminal stopping agent is preferably reacted in the aforementioned reaction as previously described. The amount of terminal stopping agent may be 0.1 part by weight or more, 0.3 parts by weight or more, 0.5 parts by weight or more or 1 part by weight or more, and 3 parts by weight or less, 2 parts by weight or less, 1 part by weight or less or 0.5 parts by weight or less based on 100 parts by weight of monomer. For example, the terminal stopping agent may be used at 0.1 parts by weight to 3 parts by weight or 0.3 parts by weight to 2 parts by weight based on 100 parts by weight of solvent.

The aforementioned reaction can be carried out at a temperature of 60°C or lower, 50°C or lower, 40°C or lower, 35°C or lower, 30°C or lower or 25°C or lower, and 0°C or higher, 10°C or higher, 15°C or higher, 20°C or higher or 25°C or higher. For example, the reaction temperature is 0°C to 60°C or 10°C to 50°C. In addition, although there are no particular limitations on the reaction time, provided residual monomer sufficiently decreases and a high molecular weight polymer is obtained, the reaction time may be 30 minutes or longer, 1 hour or longer, 2 hours or longer or 3 hours or longer, and 10 hours or less, 5 hours or less or 3 hours or less. For example, reaction time may be 30 minutes to 10 hours or 1 hour to 5 hours.

This reaction can consist of a first step, in which phosgene is blown into the reaction mixture at a comparatively low temperature, followed by a second step, in which blowing in of the phosgene is discontinued and the reaction is continued at a comparatively high temperature. For example, the first step can be carried out within a range of 0°C to 35°C, such as 10°C to 30°C, and the second step can be carried out within a range of 20°C to 50°C, such as 25°C to 35°C. In this case, the reaction temperature of the second step can be higher than the reaction temperature of the first step. These steps may respectively carried out for 10 minutes or more, 30 minutes or more, 1 hour or more or 2 hours or more, and 5 hours or less, 3 hours or less, 2 hours or less or 1 hour or less.

In addition, the polycarbonate of the present invention may also be produced by a transesterification reaction between a carbonate precursor such as a carbonic acid diester, a bisphenol compound as previously described and a diol compound having electro-optical properties .

In this case, the reaction can be carried out in an inert gas atmosphere by stirring the aforementioned bisphenol compound and diol compound having electro-optical properties with a carbonic acid diester while heating, and reducing pressure within the system to distill off the resulting alcohol or phenol compound. In this case, although varying according to boiling point of the alcohol or phenol compound formed, the reaction temperature is normally within the range of 120°C to 300°C.

In addition, examples of the aforementioned carbonic acid diester include diphenyl carbonate, dinaphthyl carbonate, bis(diphenyl) carbonate, dimethyl carbonate, diethyl carbonate and dibutyl carbonate, and among these, diphenyl carbonate can be used particularly preferably.

In this reaction, a catalyst can be used that is normally used in transesterification reactions. In addition, a terminal stopping agent as previously described can be used.

### Polycarbonate Resin Composition

The aforementioned polycarbonate of the present invention can be used as a polycarbonate resin composition by mixing with a mold release agent, heat stabilizer, ultraviolet absorber, flow modifier, antistatic agent or other known functional agent within a range that does not impair the effects of the present invention.

### Optical Control Element

The optical control element of the present invention at least contains the aforementioned polycarbonate. The aforementioned polycarbonate and polycarbonate resin composition can be preferably used as materials composing an optical control element attributable to the potent EO effect thereof, the high long-term, high-temperature stability associated with that effect, and enhanced mechanical properties.

The optical control element of the present invention can be used in, for example, an optical modulator, optical switch, multicore switch, optical interconnector, in-chip optical wiring, optical phase array, light detection and ranging (LiDAR) device, electric field sensor, THz generator, THz sensor, high-sensitivity, high S/N electroencephalograph, brain-mechanical interface (BMI) or holography using known methods. In particular, optical modulators or optical switches are examples of optical control elements.

For example, the optical control element of the present invention may be a Mach-Zehnder optical waveguide as shown in FIG. 1. The optical waveguide 8 shown in FIG. 1 comprises a lower electrode 2, a lower clad layer 3, a core layer 4, an upper clad layer 5 and an upper electrode 6 laminated in that order from the side of a substrate 1. The core layer 4 is subjected to polling processing and has an EO effect. The optical waveguide core 7 is formed by reactive ion etching and the like and constitutes a Mach-Zehnder interferometer. When an electric field is applied by either the lower electrode 2 or upper electrode 6 or electric fields are applied in mutually opposite directions by two upper electrodes 6, the refractive index of the core layer 4 located between these electric fields undergoes a change, thereby causing a change in the phase difference between both arms of the Mach-Zehnder interferometer and making it possible to modulate the intensity of propagated light.

This type of Mach-Zehnder optical waveguide can be produced according to a known method as described in, for example, PTL1.

Although the following examples provide a more detailed explanation of the present invention, the present invention is not limited thereto.

### EXAMPLES

### Synthesis Example

The diol compound having electro-optical properties represented by the following chemical formula (EO-1) was synthesized according to steps 1 to 11 indicated below.

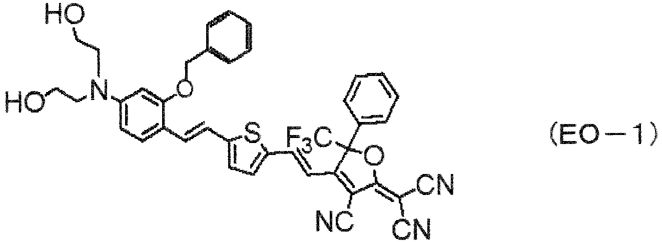

### Synthesis Example - Step 1

Step 1 is as represented by the reaction formula indicated below.

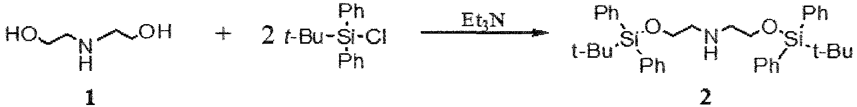

18.35 g (0.175 mol) of diethanolamine (Compound 1 in the formula) and 71.0 g (0.702 mol) of trimethylamine were dissolved in 500 ml of acetonitrile. 96.0 g (0.349 mol) of tert-butylchlorodiphenyl silane were dropped in while stirring at room temperature, followed by stirring for 5 hours. The deposited crystals were removed followed by concentrating the filtrate and drying. The resulting white solid was extracted with 750 ml of hexane. The hexane was distilled off to obtain 81.27 g of Compound 2 as a colorless oily substance (which solidifies after allowing to stand at room temperature).

In addition, after suspending 24.86 g of the hexane-insoluble fraction in 200 ml of water, 200 ml of saturated sodium bicarbonate and 300 ml of hexane were added and stirred (crystals dissolved). The hexane layer was removed and dehydrated with anhydrous magnesium sulfate, followed by concentrating to obtain 20.62 g of Compound 2. A total of 101.89 g of Compound 2 was obtained (crude yield: 101.9%).

### Synthesis Example - Step 2

Step 2 is as represented by the reaction formula indicated below.

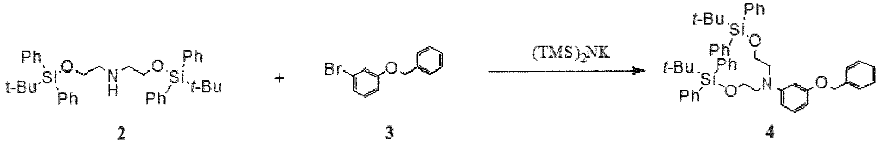

75.5 g (0.13 mol) of Compound 2 and 334.0 g (0.13 mol) of Compound 3 (1-benzyloxy-3- bromobenzene) were dissolved in 500 ml of anhydrous toluene, followed by the addition of 30.9 g (0.155 mol) of potassium bis(trimethylsilyl)amide while stirring at room temperature. After stirring for 2 hours in an oil bath at 110°C, the solution was cooled and washed twice with saturated saline. The organic layer was extracted with anhydrous sodium sulfate and concentrated. 102.43 g of Compound 4 were obtained as an oily substance (crude yield: 103.7%).

### Synthesis Example - Step 3

Step 3 is as represented by the reaction formula below.

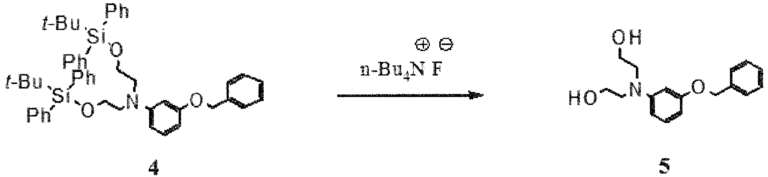

102.43 (0.134 mol) of Compound 4 were dissolved in 250 ml of tetrahydrofuran, followed by dropping in 372 ml of tetrabutylammonium fluoride (1 mol tetrahydrofuran solution) while stirring at room temperature. After stirring for 30 minutes, the solution was poured into 1000 ml of water and extracted with ethyl acetate. After washing with saturated saline, the product was dehydrated with anhydrous sodium sulfate and concentrated. After adding 500 ml of hexane to the residue and stirring, the hexane layer was removed by filtration. The filtration residue was concentrated followed by purification by silica gel column chromatography (chloroform/methanol = 10/1) to obtain 27.03 g of Compound 5 as a pale yellow oily substance (yield: 72.8%).

### Synthesis Example - Step 4

Step 4 is as represented by the reaction formula below.

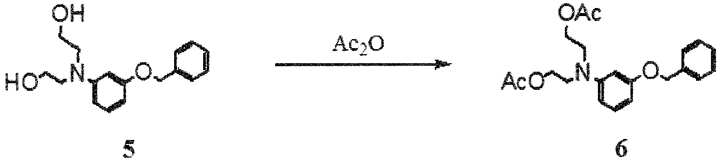

40 ml of acetic anhydride were added to 27.03 g (0.094 mol) of Compound 5, followed by stirring for 1 hour and 45 minutes in an oil bath. After cooling, 300 ml of ether and 400 ml of water were added followed by stirring for 30 minutes. The organic layer was separated and the aqueous layer was extracted with 200 ml of ether. This was combined with the organic layer and washed with saturated sodium bicarbonate and then saturated saline, followed by dehydrating with anhydrous magnesium sulfate and concentrating. The residue was purified by silica gel column chromatography (ethyl acetate/hexane = 1/1). 31.75 g of Compound 6 were obtained as a pale yellow oily substance (yield: 90.9%).

### Synthesis Example - Step 5

Step 5 is as represented by the reaction formula below.

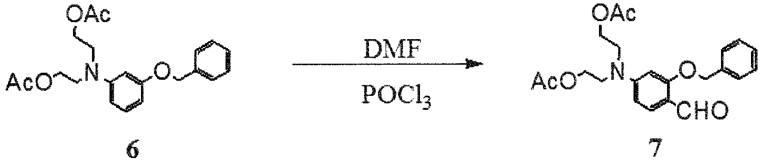

13.20 g (0.0861 mol) of phosphorous oxychloride were dropped into 80 ml of N,N-dimethylformamide while stirring on ice. After 20 minutes, the solution was removed from the ice bath and heated to 12°C, followed by stirring for 5 minutes. The solution was again cooled with ice followed by dissolving 30.80 g (0.0829 mol) of Compound 6 in 40 ml of N,N-dimethylfonnamide and dropping in. After stirring for 30 minutes, the solution was gradually heated and stirred for 2 hours at 70°C. 180 ml of 20% aqueous sodium acetate were dropped into the reaction solution while cooling in an ice bath, followed by stirring for 40 minutes. After extracting twice with chloroform, the extract was sequentially washed with saturated saline, saturated aqueous sodium bicarbonate and saturated saline. After dehydrating with anhydrous sodium sulfate and concentrating, the residue was crystallized from ethanol and filtered. 28.0 g of Compound 7 were obtained as colorless crystals having a melting point of 86°C to 87°C. The filtrate was concentrated and purified by silica gel column chromatography (ethyl acetate/hexane = 3/2) to obtain 2.70 g of Compound 7. Thus, a total of 30.7 g of Compound 7 were obtained (yield: 92.7%).

### Synthesis Example - Step 6

Step 6 is as represented by the reaction formula below.

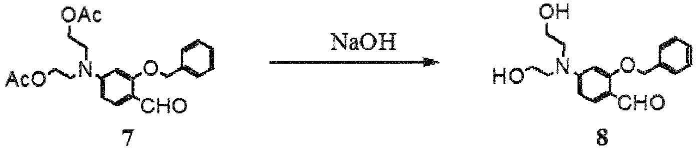

28.29 g (70.82 mmol) of Compound 7 were dissolved in 150 ml of ethanol, followed by dropping in 100 ml of 7.4% aqueous sodium hydroxide and stirring for 30 minutes at room temperature. The reaction solution was poured into 600 ml of saturated saline and extracted with chloroform. The extract was washed with saturated saline and dehydrated with anhydrous sodium sulfate, followed by concentrating. The resulting powder was recrystallized using ethyl acetate to obtain 21.79 g of Compound 8 as white crystals having a melting point of 108°C to 109°C (yield: 97.5%).

### Synthesis Example - Step 7

Step 7 is as represented by the reaction formula below.

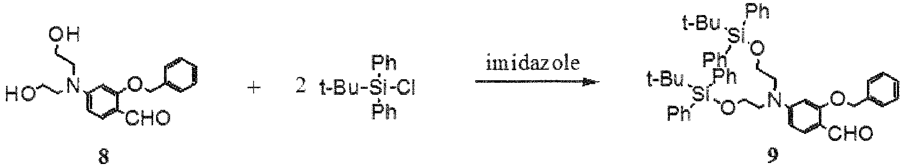

21.78 g (69.06 mmol) of Compound 8 and 21.6 g (317.28 mmol) of imidazole were dissolved in 100 ml of N,N-dimethylformamide. 39.0 g (141.9 mmol) of tert-butylchlorodiphenyl silane were dropped in while stirring at room temperature. After stirring for 40 minutes, the reactants were added to 400 ml of water and extracted with ethyl acetate. The extract was washed with saturated saline and dehydrated with anhydrous sodium sulfate, followed by concentrating. The residue was purified by silica gel column chromatography (ethyl acetate/hexane = 2/5). As a result, 51.3 g of Compound 9 were obtained as a pale yellow oily substance (yield: 93.8%).

### Synthesis Example - Step 8

Step 8 is as represented by the reaction formula below.

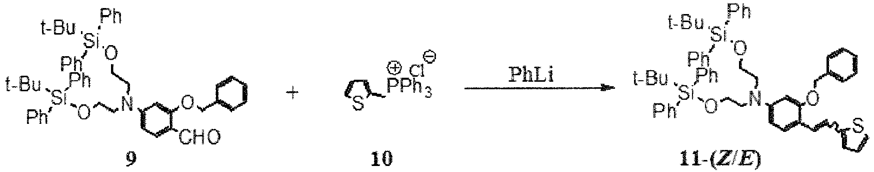

27.6 ml (57.9 mmol) of phenyl lithium (2.1 mol dibutyl ether solution) were added to 250 ml of tetrahydrofuran in the presence of an argon flow, followed by the addition of 20.8 g (52.7 mmol) of Compound 10 (2-thenyltriphenyl phosphonium chloride) while stirring and cooling with ice. Furthermore, Compound 10 was synthesized according to the method shown in Fig. 2(c) of NPL3. After stirring for 10 minutes, 28.68 g (52.7 mmol) of Compound 9 were dropped in as 80 ml of a tetrahydrofuran solution. After stirring for 2 hours while cooling with ice, the solution was poured into 550 ml of water and extracted with ethyl acetate. After washing with saturated saline, the solution was dehydrated with anhydrous sodium sulfate and concentrated. 240 ml of ethyl acetate/hexane (1/5) were added to the residue and stirred, followed by cooling with ice. After filtering out the precipitate and concentrating, the residue was purified by silica gel column chromatography (ethyl acetate/hexane = 1/5) to obtain 30.18 g of Compound 11-(Z/E) as an orange oily substance (yield: 91.7%).

### Synthesis Example - Step 9

Step 9 is as represented by the reaction formula below.

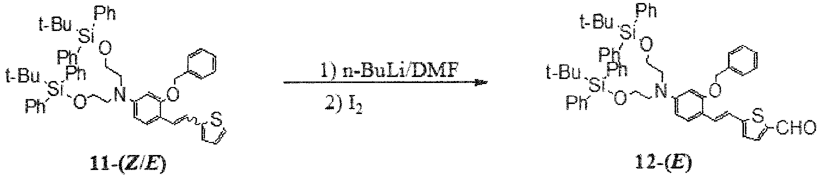

47.8 g (54.8 mmol) of Compound 11-(Z/E) were dissolved in 320 ml of tetrahydrofuran in the presence of an argon flow, followed by dropping in 44.6 ml (71.4 mmol) of n-butyl lithium (1.6 mol hexane solution) while cooling a dry ice/acetone bath. After stirring for 20 minutes, 4.47 g (61.2 mmol) of N,N-dimethylformamide were dropped in. After stirring for 40 minutes, the reaction solution was removed from the bath and heated followed by dropping in 20 ml of water. After stirring for 35 minutes, the reaction solution was poured into 600 ml of water and extracted with ethyl acetate. The extract was washed with saturated saline and dehydrated with anhydrous sodium sulfate, followed by concentrating. 49.63 g of the resulting dark red oily substance were dissolved in 800 ml of ether, followed by the addition thereto of 1.5 g of an iodine fragment. After stirring for 30 minutes at room temperature, the solution was washed twice with 200 ml of 5% aqueous sodium hydrogen sulfite. After further washing with saturated saline, the solution was concentrated by dehydrating with anhydrous magnesium sulfate. The residue was purified by silica gel column chromatography (ethyl acetate/hexane = 1/3) to obtain 40.59 g of Compound 12-(E) as a red oily substance (yield: 82.3%).

### Synthesis Example - Step 10

Step 10 is as represented by the reaction formula below.

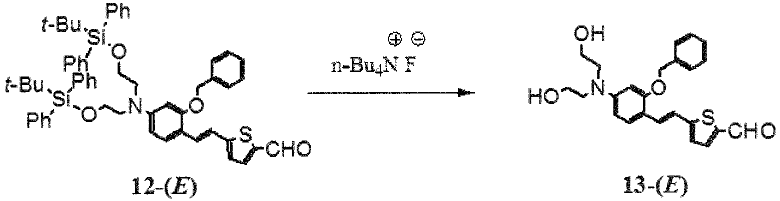

38.0 g (42.2 mmol) of Compound 12-(E) were dissolved in 150 ml of tetrahydrofuran. 125 ml of tetrabutylammonium fluoride (1 mol tetrahydrofuran solution) were dropped in while stirring at room temperature. After stirring for 30 minutes, the solution was poured into 500 ml of water and extracted with 250 1 of ethyl acetate. The extract was washed with saturated saline and concentrated by dehydrating with anhydrous sodium sulfate. The residue was purified by silica gel column chromatography (chloroform/methanol = 10/1). 17.08 g of the target compound 13-(E) were obtained as a red oily substance (yield: 95.6%).

### Synthesis Example - Step 11

Step 11 is as represented by the reaction formula below.

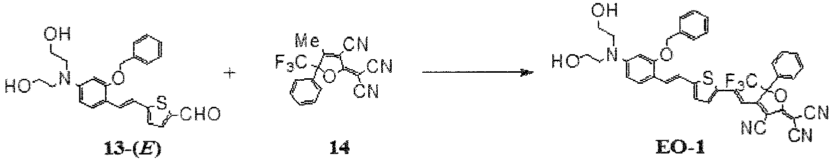

2.0 g (4.72 mmol) of Compound 13-(E) and 1.64 g (5.20 mmol) of Compound 14 (2-(3-cyano-4-methyl-5-phenyl-5-trifluoromethyl-2(5H)-furanylidene) propane dinitrile) were dissolved in 18 ml of ethanol and 2 ml of tetrahydrofuran, followed by stirring for 2 hours while heating to 50°C. Furthermore, Compound 14 was synthesized according to the method described in NPL4. The reaction solution was cooled with ice and the precipitated crystals were filtered out and washed with ethanol. The resulting crystals were purified by silica gel column chromatography (chloroform/methanol = 10/1). Moreover, the purified crystals were washed with ethanol to obtain 2.93 g of Compound EO-1 as dark reddish-brown crystals having a melting point of 153°C to 156°C (yield: 86.2%).

### Polymer Production Examples

### Example 1

12.89 parts by weight of pyridine and 69.22 parts by weight of methylene chloride were placed in a 300 ml reaction vessel equipped with a thermometer, stirrer and reflux condenser as an acid binder and solvent, respectively. After dissolving 2.94 parts by weight of Compound EO-1, 7.17 parts by weight of bisphenol TMC (Honshu Chemical Industry Co., Ltd.) and 0.05 parts by weight of p-tert-butylphenol as a reaction stopping agent therein, 3.90 parts by weight of phosgene were blown in over the course of about 80 minutes at 15°C to 26°C while stirring. Following completion of blowing in the phosgene, the reaction was terminated by stirring for 60 minutes at 26°C to 35°C.

Following completion of the reaction and diluting the product with methylene chloride and washing with water, hydrochloric acid was added to acidify, followed by washing with water and further repeatedly washing with water until the conductivity of the aqueous phase was nearly equal to that of ion exchange water to obtain a methylene chloride solution of polycarbonate. Next, the resulting methylene chloride solution was dropped into warm water held at 50°C to 80°C, followed by distilling off the solvent to obtain a flake-like solid. The resulting solid was filtered out and dried at 120°C for 24 hours to obtain 9.54 g of the black, flake-like polycarbonate of Example 1.

### Example 2

5.03 g of the polycarbonate of Example 2 were obtained by carrying out the same procedure as Example 1, with the exception of changing the amount of Compound EO-1 to 4.90 parts by weight and changing the amount of bisphenol TMC to 6.33 parts by weight.

### Example 3

7.71 g of the polycarbonate of Example 3 were obtained by carrying out the same procedure as Example 1, with the exception of changing the 7.17 parts by weight of bisphenol TMC to 6.33 parts by weight of bisphenol A.

### Example 4

3.22 g of the polycarbonate of Example 4 were obtained by carrying out the same procedure as Example 3, with the exception of changing the amount of phosgene to 1.44 parts by weight.

### Comparative Example 1

### Acrylic Pendant EO Polymer

The monool compound having electro-optical properties represented by the following chemical formula (EO-2) was produced in the same manner as Example 57 of PTL5.

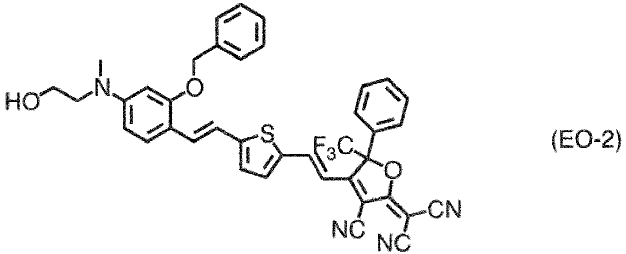

The acrylic copolymer represented by the following chemical formula (AP-1) was produced with reference to Example 2 of PTL2.

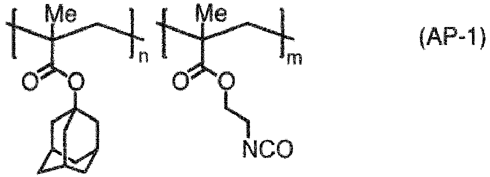

Here, n = 3.92 and m = 1.

An acrylic EO polymer was produced with reference to Example 12 of PTL2 by using AP-1 as copolymer and using EO-2 as an EO molecule, adjusting the mixing ratio so that the EO molecule concentration was 35% by weight, reacting the OH group of the EO molecule with the NCO group in the side chain of AP-1, and introducing the EO molecule as a pendant group.

### Comparative Example 2

### APEC Compound EO Polymer

A compound having electro-optical properties represented by the following chemical formula (EO-3) was produced in the same manner as Example 6 of PTL5.

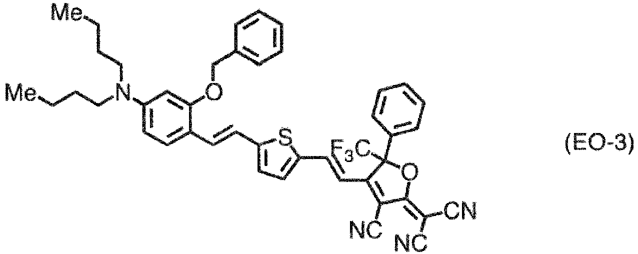

A commercially available polycarbonate (Aldrich Corp., 430587) and EO molecule EO-3 were mixed so that the EO molecule concentration was 20% by weight, followed by dissolving in cyclohexanone to produce a compound EO polymer solution.

### Evaluation

### Measurement of Weight Average Molecular Weight Mw and Molecular Weight Distribution (Mw/Mn)

The molecular weight distribution Mw/Mn of the polycarbonate copolymer was determined by measuring weight average molecular weight Mw and number average molecular weight Mn by gel permeation chromatography (GPC) by polystyrene conversion. A calibration curve was prepared using polystyrene standards having known molecular weights (12 types of Tosoh PS Oligomer Kit A-500 to F-128). Measurements were carried out using the "HLC-8220GPC" manufactured by Tosoh Corp. and three types of columns consisting of the "TSK-Gel SuperHZ 4000, 3000 and 2000 manufactured by Tosoh Corp. The sample was obtained by dissolving 10 mg of polycarbonate polymer in 5 mL of chloroform (containing 0.05% toluene as internal standard) and filtration was carried out using the "Mylex LG4" manufactured by Millipore Corp. Measurement was carried out at 40°C and flow rate of 0.35 mL/min. Chloroform for high-performance liquid chromatography manufactured by Wako Pure Chemical Industries Ltd. was used for the eluent.

### EO Site Ratio

1H-NMR spectrum was measured with a 400 MHz nuclear magnetic resonance system manufactured by JEOL by dissolving 40 mg of polycarbonate copolymer in 0.6 ml of deuterated chloroform solution, followed by calculating the EO site ratio from the spectral peak area ratio of the spectrum characteristic to each constituent.

### Measurement of Glass Transition Temperature (Tg)

The Tg values of the polymers obtained in the examples and comparative examples were measured using a scanning differential calorimeter (DSC-60A, Shimadzu Corp.) under conditions consisting of a measurement sample size of 10 mg, using an A1 empty container as a reference sample, and measuring at a heating rate of 20°C/min in a nitrogen atmosphere.

### Measurement of Electro-Optical Coefficient (r₃₃)

Solutions obtained by dissolving each polymer in cyclohexanone at concentrations of 1 wt% to 20 wt% were coated onto glass substrates provided with an ITO film having a thickness of 9 nm (Geomatec Co., Ltd., 0008) under conditions of 500-6000 rpm using a spin coater (1H-DX2, Mikasa Co., Ltd.). Subsequently, the substrates were vacuum-dried for 1 hour at the glass transition temperature (Tg) using a vacuum constant-temperature dryer (DRV220DC, ADVANTEC TOYO Kaisha, Ltd.). Conditions for the concentrations of the polymer solutions and the rotating speed of the spin coater were suitably selected so as to obtain a desired film thickness of about 0.7 µm.

IZO was deposited at 100 nm on the aforementioned substrates provided with a polymer film and ITO film by magnetron sputtering. The substrates were heated to a temperature in the vicinity of the glass transition temperature of the polymer, followed by applying a voltage so as to generate an electric field of 120 V/µm between the ITO and IZO and setting the voltage to 0 V while cooling to room temperature after having continuing to apply the voltage for 5 minutes. As a result, samples were prepared for measuring electro-optical coefficient (EO coefficient: r₃₃).

Measurement of electro-optical coefficient (r₃₃) was carried out in the same manner as the method described in the reference literature ("Transmission ellipsometric method without an aperture for simple and reliable evaluation of electro-optic properties", Toshiki Yamada and Akira Otomo, Optics Express, Vol. 21, pages 29240-48 (2013)). The DFB Laser 81663A manufactured by Agilent Technologies, Inc. (wavelengths: 1308 nm and 1550 nm) was used for the laser light source.

### Evaluation of Long-Term, High-Temperature Stability

After measuring the EO coefficient (r₃₃) prior to heat treatment, each sample was stored in an oven maintained at a high temperature (85°C), followed by allowing the passage of 2000 hours, removing the sample, and measuring electro-optical coefficient (r₃₃). Long-term, high-temperature stability was evaluated from the ratio of the decrease in the value of the electro-optical coefficient (r₃₃) to cumulative time held at the high temperature. The case of the EO coefficient having been able to be maintained at 70% or higher following heat treatment based on a value of 100% for the EO coefficient prior to heat treatment was evaluated as "A", that in the case of maintaining at 50% or more was evaluated as B, and that in the case of cracks having formed was evaluated as "F".

### Evaluation of Strength

A polymer film was produced on a synthetic quartz substrate measuring 25 mm × 25 mm to a film thickness of about 2 µm, and the case of the absence of crack formation was evaluated as "A" and the case of the occurrence of crack formation was evaluated as "F".

### Results

The results of evaluating the configurations of Examples 1 to 4 and Comparative Examples 1 and 2 are summarized in Table 1.

**[Table 1]**

| | | | Example 1 | Example 2 | Example 3 | Example 4 | Comp. Ex. 1 | Comp. Ex. 2 |
|---|---|---|---|---|---|---|---|---|
| Polymer basic skeleton | | | Bis-TMC^{*1} | Bis-TMC | Bis-A ^{*2} | Bis-A | Acrylic | Bis-A / Bis-TMC |
| EO site introduction method | | | Copolymerization | Copolymerization | Copolymerization | Copolymerization | Pendant group | Compound |
| EO site ratio [mol%] | | | 14.1 | 23.1 | 143 | 13.9 | - | - |
| EO site ratio [wt%] | | | 26.7 | 40.1 | 26.8 | 24.8 | 35.0 | 20.0 |
| Glass transition temperature [°C] | | | 200 | 188 | 126 | 125 | 184 | 162 |
| Weight average molecular weight Mw | | | 59,000 | 58,600 | 49,000 | 15,700 | - | - |
| Molecular weight distribution Mw/Mn | | | 6.0 | 9.8 | 5.8 | 6.9 | - | - |
| Strength | | | A | A | A | F | F | A |
| EO coefficient [pm/V] | Before heat treatment | 1308nm | 36 | 61 | 37 | 35 | 82 | 50 |
| | | 1550nm | 30 | 45 | 31 | 29 | 60 | 34 |
| | After heat treatment | 1308nm | 32 | 57 | 19 | 18 | 71 | 20 |
| | | 1550nm | 26 | 40 | 16 | 15 | 51 | 16 |
| Long-term, high-temperature stability | | | A | A | B | B | A | F |

| | | | | | | | | |
|---|---|---|---|---|---|---|---|---|
| *1: Bisphenol TMCA *2: Bisphenol A | | | | | | | | |

Comparative Example 2, in which the EO site was imparted by compounding, yielded inferior results for long-term, high-temperature stability. Although Comparative Example 1, in which the EO site was introduced into an acrylic polymer by binding a pendant group, demonstrated a high EO coefficient and glass transition temperature, the strength thereof was inadequate.

### REFERENCE SIGNS LIST

- 1: Substrate
- 2: Lower electrode
- 3: Lower clad layer
- 4: Core layer
- 5: Upper clad layer
- 6: Upper electrode
- 7: Core
- 8: Optical waveguide

## Claims

1. A non-crosslinking polycarbonate containing a site having electro-optical properties.

2. The polycarbonate according to claim 1 containing a structural unit represented by the following formula (1): 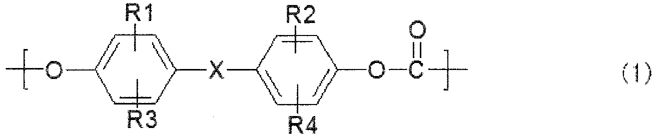 wherein R1 to R4 are respectively and independently selected from the group consisting of linear or cyclic, substituted or unsubstituted hydrocarbon groups having 1 to 20 carbon atoms, which may have a hydrogen atom, halogen atom and hetero atom and/or may be branched; and X is selected from the group consisting of linear or cyclic, substituted or unsubstituted divalent hydrocarbon groups having 1 to 30 carbon atoms, which may have a single bond, sulfur atom, oxygen atom and hetero atom and/or may be branched.

3. The polycarbonate according to claim 2, wherein X is represented by the following formula (2): 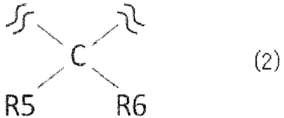
wherein at least one of R5 and R6 is selected from linear or cyclic, substituted or unsubstituted hydrocarbon groups having 2 to 20 carbon atoms, which may have a halogen atom or heteroatom and/or may be branched, while the other is selected from substituted or unsubstituted hydrocarbon groups having 1 to 20 carbon atoms, which may have a hydrogen atom, halogen atom and heteroatom and/or may be branched;
or
R5 and R6 may bond to form a substituted or unsubstituted cyclic hydrocarbon group having 4 to 20 carbon atoms, which may have a heteroatom and/or may be branched.

4. The polycarbonate according to claim 3, wherein R5 and R6 are bound to form a cyclic group having 1 to 5 substiuents, the substituents are respectively selected from alkyl groups having 1 to 4 carbon atoms, and the cyclic group is selected from a cyclic alkyl group or aryl group.

5. The polycarbonate according to any of claims 1 to 4, wherein the weight average molecular weight is 20,000 or more.

6. The polycarbonate according to any of claims 1 to 5, wherein the glass transition temperature is 120°C or higher.

7. The polycarbonate according to any of claims 1 to 6, wherein the site having electro-optical properties has an electron donating donor structural unit, an electron accepting acceptor structual unit, and a conjugated bridge structural unit that connects the donor structural unit and the acceptor structural unit.

8. A method for producing a polycarbonate, comprising: reacting a bisphenol compound, a diol compound having electro-optical properties and phosgene in the presence of an acid binder and solvent.

9. The method according to claim 8, wherein the acid binder is pyridine.

10. The method according to claim 8 or 9, wherein a terminal stopping agent is further reacted in the reaction.

11. The method according to any of claims 8 to 10, wherein the reaction is carried out at a temperature of 35°C or lower.

12. An optical control element containing the polycarbonate according to any of claims 1 to 7.

13. An optical waveguide formed by the polycarbonate according to any of claims 1 to 7.
